# EUROPEAN PATENT APPLICATION

(11) **EP 1 176 518 A2**
(43) Date of publication of application: **30.01.2002**
(21) Application number: 01100993.3
(22) Date of filing: 17.01.2001
(51) Int. Cl.: G06F 17/30

(54) **Method and system in a computer network for searching and linking web sites**

(30) Priority: 24.07.2000 US 624537
(71) Applicant: ViaGOLD Direct Network Ltd., Causeway Bay (HK)
(72) Inventor: Kung, Tien Mei, Hong Kong (CN)
(74) Representative: Kilian, Helmut, Dr.

(57) **Abstract**

A method and system of searching web sites of world wide web is provided for a user to link a web site of world wide web with the user's computer device. The method and system of the present invention allows the user to input through the computer device data which does not find its corresponding web site code in a web site database and yet to successfully link a web site of world wide web to the user's computer device by means of a search engine capable of selecting a web site code similar to the input data for linking purpose.

## Description

### BACKGROUD OF THE INVENTION

### 1. Field of the Invention

The present invention relates to methods of searching web sites of world wide web and, more particularly, to a method and system of searching web sites of world wide web whereby a user may link a desired web site of world wide web with the user's computer device through an entry web site.

### 2. Background of the Invention

General entry web sites, such as Yahoo, provide the function of searching other desired web sites of world wide web for users. After linking an entry web site, a user can type in an input box on the homepage of the entry web site a key word or a set of key words for linking the desired web site. Here in a key word means an English vocabulary or a Chinese character while a set of key words means a combination of more than one English vocabulary or Chinese character.

For example, if a user wants to search web sites about computer network, he or she has to type the set of key words "computer network" in the input box of the homepage of an entry web site. However, if the user misspells the words, for example, "compute network", "computer network" or "compute network", the entry web site can not find the corresponding web site for the user because the search engine of the entry web site is unable to locate any web sites having codes or names corresponding to the misspelled words. In other case, users can also search web sites by typing numeric. However the number of digits in the typed numeric must fulfill the searching rules set by entry web sites. That is, entry web sites can not continue to search if the number of digits in the typed numeric is less than or more than the required number. For example, if the required numeric is 023, but the user types 02 or 02333, the entry web site can not continue to search for such a request, and an error message is sent to the user's browser.

The searching systems of general entry web sites usually do not use the number of digits of numeric for request classification. For example, a numeric starting with "0" can represent the catalogue of web pages about computer. Its second digit can be furthermore used for sub-classification, for example, "01" representing the catalogue of web pages about computer hardware, and "02" about software. In either case, the first digit is "0", which is about computer. For the second digit, "1" represents hardware in the former case and "2" represents software in the latter case; further digidts are for sub-classification.

Therefore in the input box of searching pages of general entry web sites users have to enter complete words, correct numeric or click on a pop-up menu for searching other web sites. If the typed words are misspelled or the typed numeric does not have the right digits, the entry web sites cannot process the search. Moreover general entry web sites cannot use the number of digits of numeric for request classification, either. Therefore there is a need for a method and a system of searching web pages that can perform search by complete comparison and fuzzy comparison, allowing misspelled words and wrong-digit numeric in input boxes. Besides, the system can use the number of digits of numeric for request classification.

In order to solve the problems associated with general entry web sites, we use a novel method and system of searching web sites that uses the methods of complete comparison and fuzzy comparison. Therefore the input words for request can be either complete or misspelled and the input numeric can have either correct or wrong digits. In addition, the novel system also provides pop-up menus for inputs and use number of digits for request classification.

### SUMMARY OF THE INVENTION

The object of the present invention is to provide a method and system of searching web sites of world wide web, which allows a user to link a web site of world wide web even though the web site codes entered in a computer device by the user are not found in a web site database.

The system of searching web sites of world wide web includes a web site, search engine having a fuzzy comparison mechanism, web site database, message control module, and message output module.

The web site of the system is used to receive data input by the user, and to send the input data to the search engine for further process.

The search engine is used to receive the input data sent from the web site. The search engine is capable of comparing the input data with the web site codes stored in the web site database, or selecting a web site code similar to the input data. The search engine then sends the identified or selected web site codes to the message control module.

The web site database stores web site codes in the form of TCP/IP addresses, domain names, numbers or literal characters or the combination thereof.

The message control module receives the identified or selected web site codes sent from the search engine and then links the web site of world wide web corresponding to the identified or selected web site codes.

The message output module is controlled by the message control module and is used to display the homepage of the web site linked by the message control module in the computer device.

In using the searching system of the present invention, the user first enters the TCP/IP address or complete domain name of the web site of the searching system via the input URL box of the browser of the computer device. Through the request of connecting the web site of the searching system to the computer device via hypertext transfer protocol (HTTP), the homepage of the web site of the searching system is then displayed on the user's browser of the computer device. The user can then enter data for linking a desired web site of world wide web in the input box of the homepage of the web site of the searching system. The web site of the searching system accordingly sends the input data to the search engine to search the web site database, so as to locate a web site code corresponding the required web homepages according to the data by using complete comparison or to the input data or select a web site code similar to the input data. After a web site code is located or selected, it is sent to the message control module for linking the web site of world wide web corresponding to the located or selected web site code. The homepage of the web site linked by the message control module is then to be displayed in the computer device via the message output module connected to the message control module.

### BRIEF DESCRIPTION OF DRAWINGS

The above and other objects, features, and advantages of the present invention will become apparent from the following description when taken in conjunction with the accompanying drawings which illustrate preferred embodiments of the present invention by way of examples. The contents of accompanying drawings are described as follows:
Fig. 1 is a block diagram illustrating the relationship of the computer device and the system of searching web sites of world wide web according to the present invention, illustrating the connection of the system and a client computer;
Fig. 2 is a system block diagram, illustrating the basic structure of the system of searching web sites of world wide web according to the present invention;
Fig. 3 is a flow diagram illustrating the method of searching web sites of world wide web according to the present invention;
Fig. 4 is a flow diagram illustrating in detail the method shown in Fig. 3;
Fig. 5 is an embodiment of the flow chart of the procedure of searching web sites of world wide web according to the present invention, in which the input data is a complete literal code;
Fig. 6 is an embodiment of the flow chart of the procedure of searching web sites of world wide web the present invention, in which the input data is a complete numeric code;
Fig. 7 is an embodiment of the flow chart illustrating the method of searching web sites of world wide web according to the present invention, in which the input data is an incomplete literal code;
Fig. 8 is an embodiment of the flow chart illustrating the method of searching web sites of world wide web according to the present invention, in which the input data is an incomplete literal code;
Fig. 9 is the diagram of the word database of the system of searching web sites of world wide web according to the embodiments shown in Figs. 5 and 7, illustrating the relationship between the words stored in the database and corresponding TCP/IP addresses or complete domain names; and
Fig. 10 is the diagram of the numeric database of the system of searching web sites of world wide web according to the embodiments shown in Figs. 6 and 8, illustrating the relationship between the numeric stored in the database and corresponding TCP/IP addresses or complete domain names.

### DETAILED DESCRIPTION OF PREFERRED EMBODIMENTS

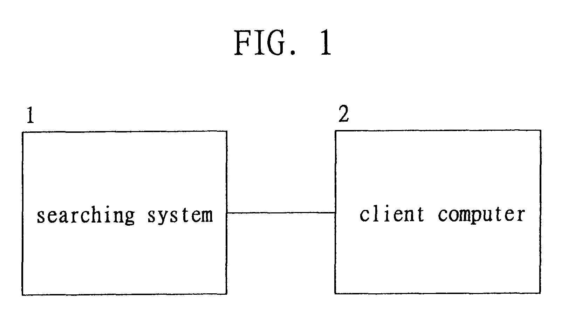

As shown in Fig. 1, the computer device 2 connects the searching system 1 of the present invention. The content of the homepage of the web site of the searching system 1 is displayed on user's browser of client computer device 2. Users enter complete or incomplete numeric or texts in an input box on the homepage of the searching system. The searching system then searches the required web homepages for the users by using complete comparison or fuzzy comparison. The input method used on the homepage of the searching system can also be done by clicking on a pop-up menu. In addition, the searching system displays the content of searched homepage to users' browsers if there are any web sites found.

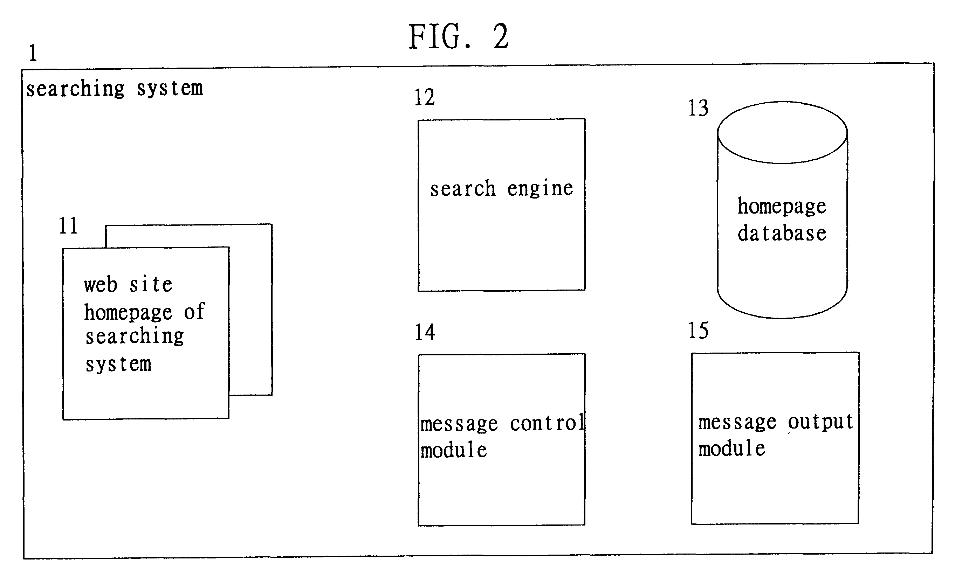

Fig. 2 is a system block diagram, illustrating the basic architecture of the method and system of searching web homepages according to the present invention. As shown in the figure, searching system consists of web site homepage 11, search engine 12, homepage database 13, message control module 14, and message output module 15.

The web site homepages 11 of the searching system 1 are used to accept input, that is, the numeric or words entered by users, and to send the input data to search engine for further process.

The search engine 12 is used to receive the input data sent from the web site homepages 11. The search engine 12 compares the input with homepage database 13 and identifies the data of searched web sites in accordance with the input. The comparison methods used by the search engine 12 can be complete or fuzzy. After finding out the data of web site homepages for the input, the search engine 12 sends the TCP/IP addresses or complete domain names corresponding to the data to the message control module 14.

Homepage database 13 consists of word correspondence database 131 and numeric correspondence database 132. Word correspondence database 131 stores words and their corresponding data of TCP/IP addresses or complete domain names. Numeric correspondence database 132 stores numeric and their corresponding data of TCP/IP addresses or complete domain names. Each word or numeric had its own corresponding data of TCP/IP address or complete domain name. The numeric correspondence database 132 of homepage database 13 uses digits of numeric to classify input data. For example, a numeric starting with "1" can represent the catalogue of web pages about finance. Under the same catalogue, the second digit of the numeric can be used for sub-classification, for example, "11" representing the catalogue of web pages about finance related to banks, and "12" about finance related to insurance. In either case, the first digit is "1", that is, the digit for the homepage catalogues about finance. The second digits, "1" representing banks in the former case and "2" representing insurance in the latter case, further digits are for sub-classification.

The message control module 14 uses the TCP/IP addresses or complete domain names sent from search engine 12 for searching sites for users. It also allows the user's browsers to connect and find web sites, and transfers the data or messages of the found web homepages to the browsers of clients through message control module 15.

The message output module 15 is controlled by the message control module 14 for transferring the data or messages of the found web homepages to the browsers of client computers 2 that connect the searching system lvia internet.

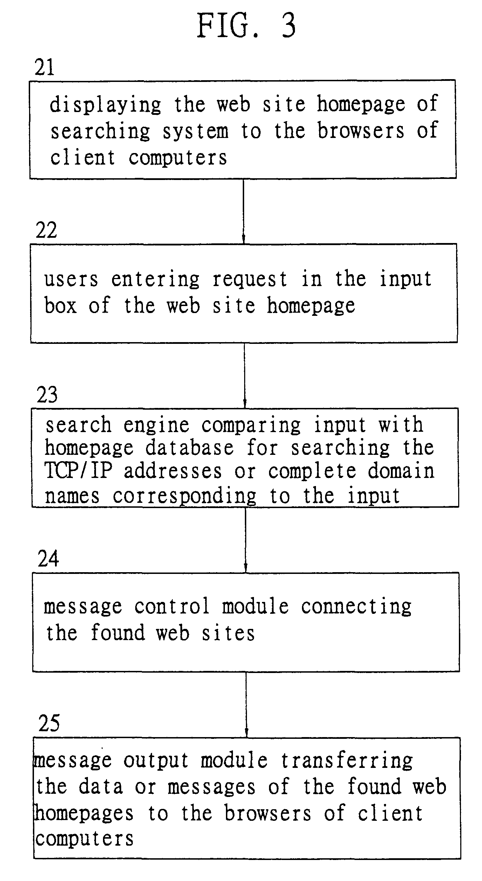

Fig. 3 is a flow diagram, illustrating the procedures of searching web site homepages by using the method and system of searching web homepages according to the present invention. As shown in the figure, in step 21 the content of the found web site homepage 11 of the searching system is displayed on the browsers of client computers 2. The procedure proceeds to step 22.

In step 22, users enter their requests, which can be words or numeric, in the input box for search on the web site homepage 11 (not shown in the figure). The input words or numeric is not necessarily complete and they are sent to search engine 12 for further process. The procedure proceeds to step 23.

In step 23, the search engine 12 compares the input from web homepage 12 with homepage database 13 and identifies the data of searched web sites corresponding to the input. The comparison methods used by the search engine 12 can be complete or fuzzy. After finding out the data of web site homepages for the input, the search engine 12 sends the TCP/IP addresses or complete domain names corresponding to the data to the message control module 14. The procedure then proceeds to step 24.

In step 24, message control module 14 uses the TCP/IP addresses or complete domain names sent from search engine 12 for searching sites for users. It also allows the user's browsers to connect and find web sites, and transfers the data or messages of the found web homepages to the browsers of client computers 2 through message control module 15. The procedure then proceeds to step 25.

In step 25, message output module 15 is controlled by the message control module 14 for transferring the data or messages of the found web homepages to the browsers of client computers 2 which are connected to the searching system 1 via internet.

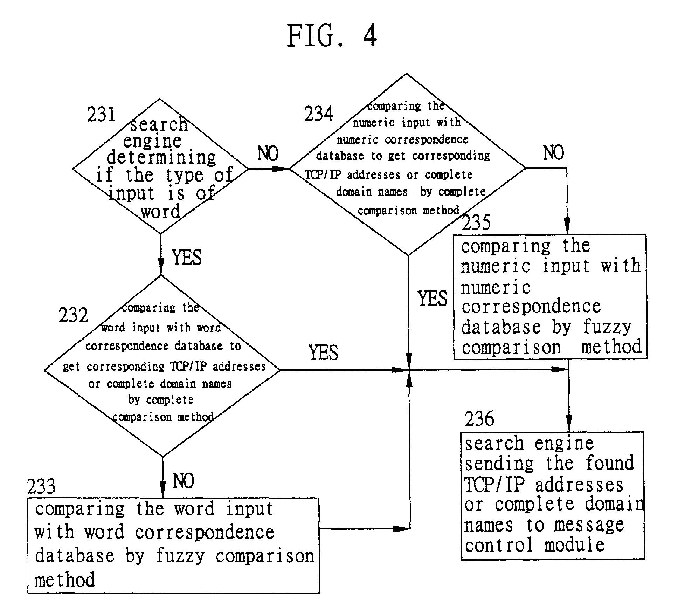

Fig. 4 is a flow diagram, illustrating in detail the procedure of comparison with homepage database conducted by the search engine in Fig. 3. As shown in the figure, in step 231 search engine 12 determines the type of the input from web homepage 11. If the type of the input is words, the procedure proceeds to step 232; if numeric, step 234.

In step 232, search engine 12 compares the input words with word correspondence database 131 by complete comparison method. If the corresponding TCP/IP addresses or complete domain names for the requested web sites can be found from the comparison, the procedure proceeds to step 236; otherwise, the procedure proceeds to step 233.

In step 233, search engine 12 compares the input words with word correspondence database 131 to get the TCP/IP addresses or complete domain names for the input by fuzzy comparison method. The comparison is targeted on searching those data that are closest to the requested web homepages. In the word correspondence database 131, each record is represented by a word combination, which in turn corresponds to the data of web site homepage. For example, the word combination for the data about computer can be "computer software", "computer hardware", and "computer firmware". If the input is "computer softwear", the search engine 12 will compare the input with word correspondence database 131 by fuzzy method. Because there is no "computer softwear" in the word correspondence database 131, the search engine will try to resolve the input by searching the closest word combination for it and get the word combination "computer software" and its TCP/IP address or complete domain name. If the input is "computer software group", of which the number of words is 3 and is greater than 2, that is, the number of words for each record, the search engine 12 will take only the first 2 words, "computer software" in this case, for fuzzy comparison. Therefore "computer software" or its closest word combination is identified and its corresponding TCP/IP address or complete domain name is resolved, too. The procedure proceeds to step 236.

In step 234, search engine 12 compares the numeric input with numeric correspondence database 132 by complete comparison method. If the corresponding TCP/IP addresses or complete domain names for the requested web sites can be found from the comparison, the procedure proceeds to step 236; otherwise, the procedure proceeds to step 235.

In step 235, search engine 12 compares the input numeric with numeric correspondence database 132 to get the TCP/IP addressed or complete domain names for the input by fuzzy comparison method. The numeric correspondence database 132 uses digits of numeric to classify input data. For example, numeric correspondence database 132 can use 3-digit numeric for each datum that corresponds to a web homepage. If the input is a 2-digit numeric, the search engine 12 will compare it with numeric correspondence database 132 to get the closest 3-digit numbers by fuzzy comparison method. Suppose there are 3-digit numbers of: [112], [113], [114], [115], [120], [121], [122], [130], [131], and [132] in the numeric correspondence database 132. The fuzzy comparison method will resolve [112], [113], [114] and [115] if the input numeric is [11]. The TCP/IP addresses or complete domain names for the resolved numbers will be identified, too. On the other hand, if the input is a 4-digit number, [1122], of which the number of digits is greater than 3, the search engine 12 will take only the first 3 digits, that is, [112], for the fuzzy comparison. And the result is [112] and its corresponding TCP/IP address or complete domain name. The procedure proceeds to step 236.

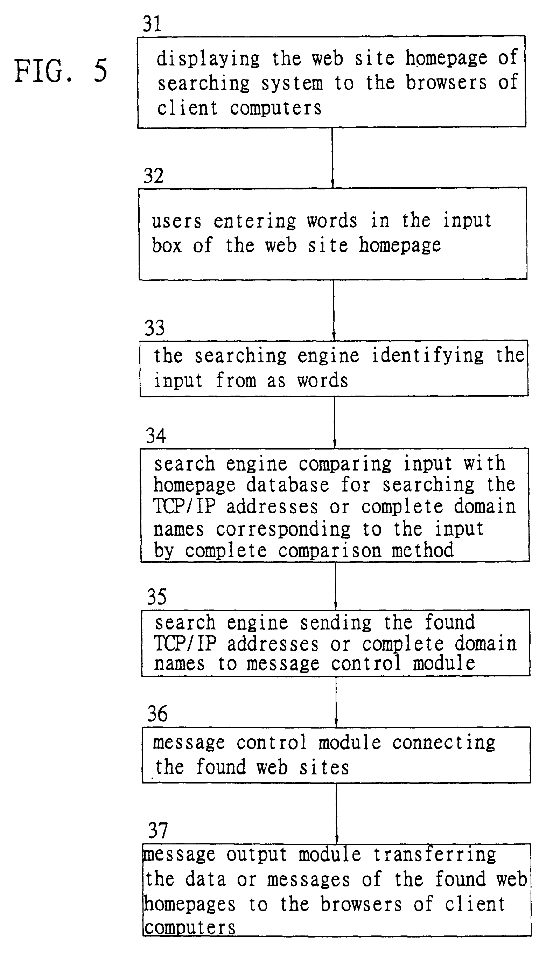

In step 236, search engine 12 sends the found TCP/IP addresses or complete domain names to the message control module 14 of the search system 1. Fig. 5 is an embodiment of the flow chart of the procedure of searching web site homepages according to the method and system of searching web homepages of the present invention, in which the input is in words. As shown in the step 31 of the figure, when the computer 2 of client connects internet, users can enter in the input URL box on their browsers the found TCP/IP addresses or complete domain names on the web site homepage 11 of the searching system 1. This directs the searching system to connect to the internet according to the entered TCP/IP addresses or complete domain names by HTTP and to display the content of the web site homepage 11 on users' browsers. The procedure proceeds to step 32.

In step 32, the computer 2 of client is connected to the searching system 1 and the content of the web site homepage 11 is displayed on users' browsers. As an example, users can enter the words [computer hardware] in the input box for search on the web site homepage 11 (not shown in the figure). The web site homepage 11 then sends the input to searching engine 12. The procedure proceeds to step 33.

In step 33, the searching engine 12 identifies the input from the web site homepage 11 as words. The procedure proceeds to step 34.

In step 34, search engine 12 compares the input words with word correspondence database 131 by complete comparison method. Suppose there are word combinations of [computer software], [computer hardware] and [computer firmware] in the word correspondence database 131. The complete comparison method will resolve [computer hardware]. The TCP/IP addresses or complete domain names for the resolved word combination will be identified, too. The procedure proceeds to step 35.

In step 35, search engine 12 sends the found TCP/IP addresses or complete domain names to the message control module 14 of the search system 1. The procedure proceeds to step 36.

In step 36, the message control module 14 uses the TCP/IP addresses or complete domain names sent from search engine 12 for searching sites for users. It also makes user's browsers connect found web sites and transfers the data or messages of the found web homepages to the browsers of client computers 2 through message control module 15. The procedure proceeds to step 37.

In step 37, the message output module 15 is controlled by the message control module 14 for transferring the data or messages of the found web homepages to the browsers of client computers 2 which are connected to the searching system 1 via internet.

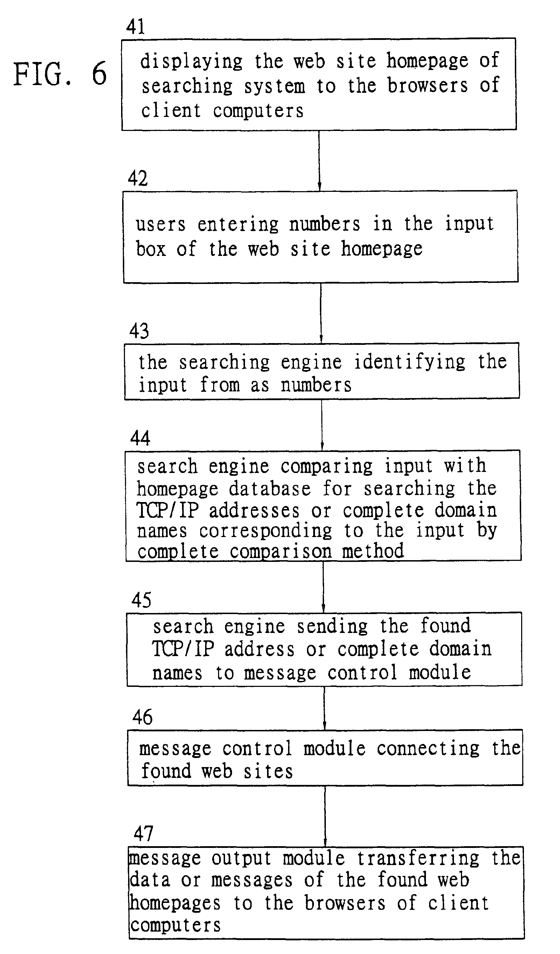

Fig. 6 is an embodiment of the flow chart of the procedure of searching web site homepages according to the method and system of searching web homepages of the present invention, in which the input is numeric. As shown in the figure, in step 41 the content of the found web site homepage 11 of the searching system is displayed on the browsers of client computers 2. The procedure proceeds to step 42.

In step 42, users enter numeric request, for example, [113], in the input box for search on the web site homepage 11 (not shown in the figure). The input numeric is sent to search engine 12 for further process. The procedure proceeds to step 43.

In step 43, search engine 12 compares the input numeric [113] with numeric correspondence database 132 by complete comparison method. The numeric correspondence database 132 uses digits of numeric to classify input data. For example, numeric correspondence database 132 can use 3-digit numeric for each datum that corresponds to a web homepage. Suppose there are 3-digit numbers of [112], [113], [114], [115], [120], [121], [122], [130], [131), and [132] in the numeric correspondence database 132. The complete comparison method will resolve [113] if the input numeric is [113]. The TCP/IP addresses or complete domain names for the resolved number will be identified, too. The procedure proceeds to step 45.

In step 45, search engine 12 sends the found TCP/IP addresses or complete domain names to the message control module 14 of the search system 1. The procedure proceeds to step 46.

In step 46, the message control module 14 uses the TCP/IP addresses or complete domain names sent from search engine 12 for searching sites for users. It also connects the user's browsers to the found web sites and transfers the data or messages of the found web homepages to the browsers of client computers 2 through message control module 15. The procedure proceeds to step 47.

In step 47, the message output module 15 is controlled by the message control module 14 for transferring the data or messages of the found web homepages to the browsers of client computers 2 that connect the searching system 1 via internet.

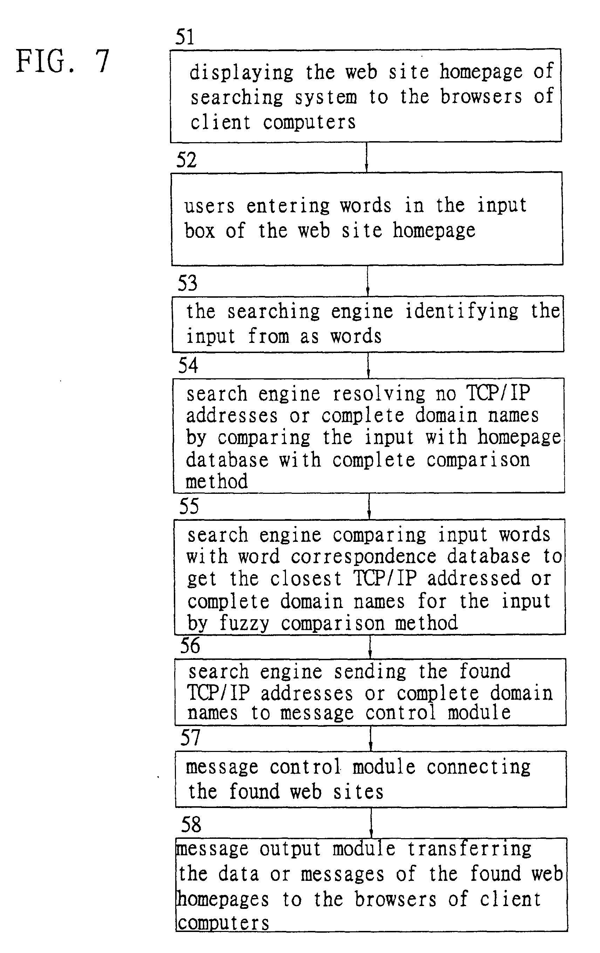

Fig. 7 is an embodiment of the flow chart of the procedure of searching web site homepages according to the method and system of searching web homepages of the present invention, in which the input is in words and the applied method is fuzzy comparison. As shown in the figure, in step 51 the content of the found web site homepage 11 of the searching system is displayed on the browsers of client computers 2. The procedure proceeds to step 52.

In step 52, users enter request, for example, [computer softwear], in the input box for search on the web site homepage 11 (not shown in the figure). The input is sent to search engine 12 for further process. The procedure proceeds to step 53.

In step 53, the searching engine 12 identifies the input from the web site homepage 11 as words. The procedure proceeds to step 54.

In step 54, search engine 12 compares the input words with word correspondence database 131 by complete comparison method. Suppose there are word combinations of [computer software], [computer hardware] and [computer firmware] in the word correspondence database 131. However, no word combination is identified from the complete comparison if the input is [computer softwear]. Therefore, no TCP/IP addresses or complete domain names for the requested word combination is identified. The procedure proceeds to step 55.

In step 55, search engine 12 compares the input words with word correspondence database 131 to get the TCP/IP addressed or complete domain names for the input by fuzzy comparison method. The comparison is targeted on searching those data that are closest to the requested web homepages. In the word correspondence database 131, each record is represented by a word combination, which in turn corresponds to the data of web site homepage. For example, the word combination for the data about computer can be "computer software", "computer hardware", and "computer firmware". If the input is "computer softwear", the search engine 12 will compare the input with word correspondence database 131 by fuzzy method. Because there is no "computer softwear" in the word correspondence database 131, the search engine will try to resolve the input by searching the closest word combination for it and get the word combination "computer software" and its TCP/IP address or complete domain name. The procedure proceeds to step 56.

In step 56, search engine 12 sends the found TCP/IP addresses or complete domain names to the message control module 14 of the search system 1. The procedure proceeds to step 57.

In step 57, the message control module 14 uses the TCP/IP addresses or complete domain names sent from search engine 12 for searching sites for users. It also connects the user's browsers to the found web sites and transfers the data or messages of the found web homepages to the browsers of client computers 2 through message control module 15. The procedure proceeds to step 58.

In step 58, the message output module 15 is controlled by the message control module 14 for transferring the data or messages of the found web homepages to the browsers of client computers 2 that connect the searching system 1 via internet.

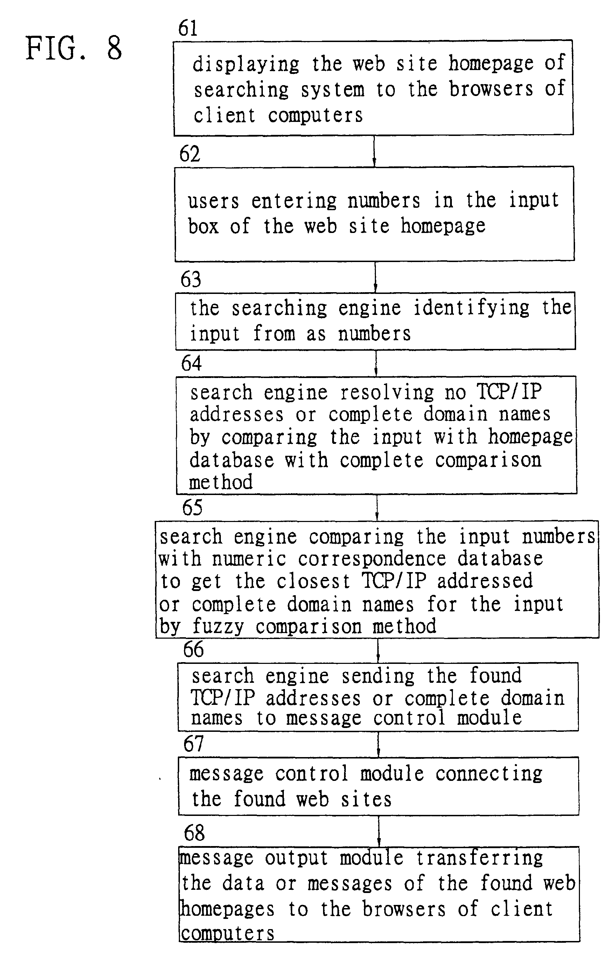

Fig. 8 is an embodiment of the flow chart of the procedure of searching web site homepages according to the method and system of searching web homepages of the present invention, in which the input is numeric and the applied method is fuzzy comparison. As shown in the step 61 of the figure, when the computer 2 of client is connected to the internet, users can enter in the input URL box on their browsers the found TCP/IP addresses or complete domain names on the web site homepage 11 of the searching system 1. This directs the searching system to be connected to the internet according to the entered TCP/IP addresses or complete domain names by HTTP and to display the content of the web site homepage 11 on users' browsers. The procedure proceeds to step 62.

In step 62, the computer 2 of client is connected to the searching system 1 and the content of the web site homepage 11 is displayed on users' browsers. For example, users can enter the numeric [11] in the input box for search on the web site homepage 11 (not shown in the figure). The web site homepage 11 then sends the input to searching engine 12. The procedure proceeds to step 63.

In step 63, the searching engine 12 identifies the input from the web site homepage 11 as words. The procedure proceeds to step 64.

In step 64, search engine 12 compares the input numeric [11] with numeric correspondence database 132 by complete comparison method. The numeric correspondence database 132 uses digits of numeric to classify input data. For example, numeric correspondence database 132 can use 3-digit numeric for each datum that corresponds to a web homepage. Suppose there are 3-digit numbers of [112], [113], [114], [115], [120], [121], [122], [130], [131], and [132] in the numeric correspondence database 132. The complete comparison method will not find a 3-digit number for the input [11]. Therefore the TCP/IP addresses or complete domain names for the requested number will not be identified. The procedure proceeds to step 65.

In step 65, search engine 12 compares the input numeric with numeric correspondence database 132 to get the TCP/IP addressed or complete domain names for the input by fuzzy comparison method. Suppose there are 3-digit numbers of [112], [113], [114], [115], [120], [121], [122], [130], [131], and [132] in the numeric correspondence database 132. The fuzzy comparison method will resolve [112], [113], [114] and [115] if the input numeric is [11]. The TCP/IP addresses or complete domain names for the resolved numbers will be identified, too. The procedure proceeds to step 66.

In step 66, search engine 12 sends the found TCP/IP addresses or complete domain names to the message control module 14 of the search system 1. The procedure proceeds to step 67.

In step 67, the message control module 14 uses the TCP/IP addresses or complete domain names sent from search engine 12 for searching sites for users. It also connects the user's browsers to the found web sites and transfers the data or messages of the found web homepages to the browsers of client computers 2 through message control module 15. The procedure proceeds to step 68.

In step 68, the message output module 15 is controlled by the message control module 14 for transferring the data or messages of the found web homepages to the browsers of client computers 2 that connect the searching system 1 via internet.

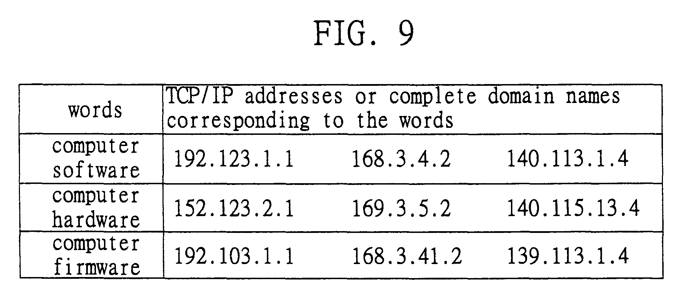

Fig. 9 is the diagram of the word database of the system of searching web homepage according to the embodiments in Figs. 5 and 7, illustrating the relationship between the words stored in the database and corresponding TCP/IP addresses or complete domain names. As shown in the figure, the TCP/IP addresses corresponding to the word combination [computer software] are 192.123.1.1, 168.3.4.2 and 140.113.1.4; the TCP/IP addresses corresponding to the word combination [computer hardware] are 152.123.2.1, 169.3.5.2 and 140.115.13.4; the TCP/IP addresses corresponding to the word combination [computer firmware] are 192.103.1.1, 168.3.41.2 and 139.113.1.4.

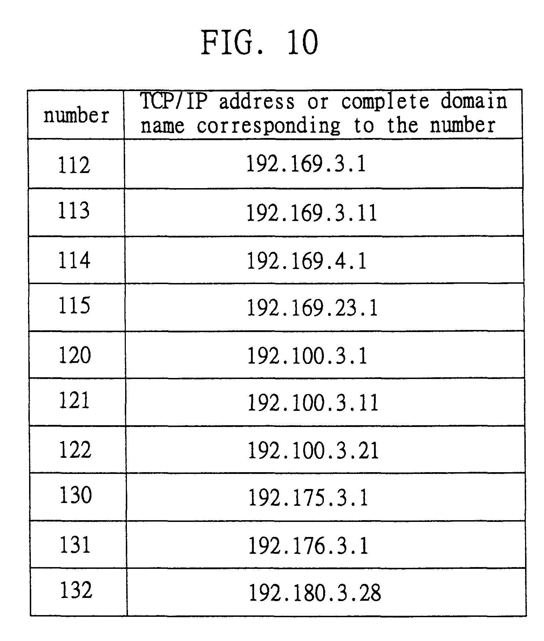

Fig. 10 is the diagram of the numeric database of the system of searching web homepage according to the embodiments in Figs. 6 and 8, illustrating the relationship between the numeric stored in the database and corresponding TCP/IP addresses or complete domain names. As shown in the figure, the 3-digit numbers for representing data are [112], [113], [114], [115], [120], [121], [122], [130], [131], and [132] in the numeric correspondence database 132. The TCP/IP address corresponding to [112] is 192.169.3.1; the TCP/IP address corresponding to [113] is 192.169.3.11; the TCP/IP address corresponding to [114] is 192.169.4.1; the TCP/IP address corresponding to [115] is 192.169.23.1; the TCP/IP address corresponding to [120] is 192.100.3.1; the TCP/IP address corresponding to [121] is 192.100.3.11; the TCP/IP address corresponding to [122] is 192.100.3.21; the TCP/IP address corresponding to [130] is 192.175.3.1; the TCP/IP address corresponding to [131] is 192.176.3.1; the TCP/IP address corresponding to [132] is 192.180.3.28.

Although certain preferred embodiments of the present invention have been shown and described in detail, it should be understood that various changes and modifications may be made therein without departing from the scope of the appended claims.

## Claims

1. A method of searching web sites of world wide web, applicable to a searching system including web site of the searching system, search engine, web site database, message control module, and message output module, for users to search the web sites of world wide web via computer devices, comprising the steps of:
(1)linking the computer device with internet for the user to input the web site code of the web site of the searching system via the computer device, to thereby link the web site of the searching system to the computer device, allowing the homepage of the web site of the searching system to be displayed in the computer device;
(2) inputting data for linking a desired web site of world wide web by the user into the input box of the web site homepage of the searching system to thereby transfer the input data to the search engine;
(3)comparing the input data with web site codes stored in the web site database by the search engine with a fuzzy comparison mechanism, so as to locate a web site code corresponding to the input data when a match is achieved or to select a web site code similar to the input data when a match is not achieved, to thereby send the located or selected web site code to the message control module;
(4) linking the message control module with the web site corresponding to the located or selected web site code received by the message control module; and
(5) displaying the homepage of the linked web site of world wide web in the computer device via the message output module connected to the message control module.

2. The method of searching web sites of world wide web according to claim 1, wherein the data input into the computer device and the web site codes stored in the web site database are in a numeric form.

3. The method of searching web sites of world wide web according to claim 1, wherein the data entered into the computer device and the web site codes stored in the web site data base are in a literal form.

4. The method of searching web sites of world wide web according to claim 1, wherein the data entered into the computer device and the web site codes stored in the web site database are subject to TCP/IP addresses.

5. The method of searching web sites of world wide web according to claim 1, wherein the data entered into the computer device and the web site codes stored in the web site database are subject to domain name.

6. The method of searching web sites of world wide web according to claim 1, wherein the Web site database contains at least two different sets of web site codes selected from TCP/IP addresses domain names, numeric codes or literal codes.

7. The method of searching web sites of world wide web according to claim 6, further comprising the step of determining the nature of the input data by the search engine for selecting an appropriate set of web site code corresponding to the nature of the input data from the web site database prior to the proceeding of step (3), under the circumstance that the web site database contains at least two different sets of web site codes.

8. The method of searching web sites of world wide web according to claim 1, wherein step (3) includes the following substeps:
(1) comparing the input data with web site codes stored in the web site database by the search engine; if a web site code which correspondes to the input date is located, then proceed to substep (3); if not, proceeding to substep (2); and
(2) comparing the input data with web site codes stored in the web site database by the search engine in a fuzzy comparison method to select from the web site codes a certain web site code similar to the input data; and
(3) sending the located web site code from substep (1) or the selected web site code from substep (2) to the message control module.

9. A system of searching web sites of world wide web, which allows users to use the browser installed with a computer device to search web sites of world wide web, the system comprising:
a web site for receiving data input by the user so as to send out the input data for further process;
a search engine having a fuzzy comparison mechanism and being used to receive the input data from the web site for comparing the input data with web site codes stored in a web site database, in order to locate a web site code corresponding to the input data when a match is achieved or to select a web site code similar to the input data when a match is not achieved; the search engine being capable of sending out the located or selected web site code for further process;
a message control module used to link the web site of world wide web corresponding to the located or selected web site code sent from the search engine; and
a message output module connected to the message control module and being used to send and display in the computer device the homepage of the linked web site of world wide web.

10. The system of searching web sites of world wide web according to claim 9, wherein the data input into the computer device and the web site codes stored in the web site database are in a numeric form.

11. The system of searching web sites of world wide web according to claim 9, wherein the data input into the computer device and the web site codes stored in the web site data base are in a literal form.

12. The system of searching web sites of world wide web according to claim 9, wherein the data input into the computer device and the web site codes stored in the web site database are subject to TCP/IP addresses,

13. The system of searching web sites of world wide web according to claim 9, wherein the data input into the computer device and the web site codes stored in the web site database are subject to domain name.

14. The system of searching web sites of world wide web according to claim 9, wherein the web site database contains at least two different sets of web site codes selected from TCP/IP addresses, domain names, numeric codes or literal codes.

15. The system of searching web sites of world wide web according to claim 14, wherein the search engine is capable of determining the nature of the input data so as to select an appropriate set of web site codes corresponding to the nature of the input data from the web site database, prior to comparing the input data with web site codes stored in the web site database, under the circumstance that the web site database contains at least two different sets of web site codes.

16. The system of searching web sites of world wide web according to claim 9, wherein the search engine is capable of selecting a web site code similar to the input data and sending the selected web site code to the message control module, when a web site code corresponding to the input data is not found in the web site database.
